# EUROPEAN PATENT SPECIFICATION

(11) **EP 3 098 436 B1**
(45) Date of publication and mention of the grant of the patent: **26.02.2020**
(21) Application number: 15169852.9
(22) Date of filing: 29.05.2015
(51) Int. Cl.: F03D 1/06

(54) **NOISE REDUCING FLAP WITH OPENING**
GERÄUSCHREDUZIERENDE KLAPPE MIT ÖFFNUNG
VOLET DE RÉDUCTION DE BRUIT AVEC UNE OUVERTURE

(43) Date of publication of application: 30.11.2016
(73) Proprietor: Siemens Gamesa Renewable Energy A/S, 7330 Brande (DK)
(72) Inventor: Lorenzoni, Valerio, 1400 Kebenhavn (DK); Oerlemans, Stefan, 7400 Herning (DK); Olsen, Anders Smaerup, 2000 Frederiksberg (DK); Singh, Manjinder J., Broomfield, 80020 (US)
(74) Representative: Aspacher, Karl-Georg

(56) References cited:
- WO-A1-2013/076009
- WO-A1-2014/207015
- WO-A2-2011/157849
- US-A1- 2010 143 151

## Description

The present invention relates to a rotor blade for a wind turbine with a noise reducing device at the trailing edge section of the rotor blade. Furthermore, the invention relates to a wind turbine comprising at least one of such a rotor blade.

Noise arising from wind turbine rotor blades is a critical factor when it comes to attaining a permission to erect a wind turbine, e.g. close to residential areas. The wind turbine industry and research institutes are consequently continuously searching for ways to reduce and mitigate noise from operating wind turbine rotor blades. For modern large wind turbines, the dominant noise source is noise which is generated at the trailing edge section of the rotor blade. In particular, noise is generated by the interaction between the rotor blade and the airflow impinging on the rotor blade. Furthermore, noise which is generated at the radially outer part of the rotor blade, i.e. at the part which is adjacent to the tip section of the rotor blade, may be perceived as particularly disturbing.

Noise which is generated at the trailing edge section of the rotor blade can be described as being generated by the passage of eddies in the turbulent boundary layer of the rotor blade over the trailing edge of the rotor blade.

From yet another perspective, the generation of noise at the trailing edge can also be understood as the scattering of unsteady surface pressures at the trailing edge. In this context, the surface pressures can be seen as the footprint of the turbulent boundary layer.

Conventional approaches to reduce trailing edge noise include the provision of a serrated trailing edge. A serrated trailing edge can be obtained by attaching a serrated panel along at least a portion of the trailing edge of the rotor blade. By this measure, the level of noise can be considerably reduced.

However, the generated noise can still be unsatisfying high for specific sites or specific applications.
In this respect, the document WO 2013/076009 A1 discloses a rotor blade of a wind turbine with noise reduction means. The noise reduction means comprise serrations at the trailing edge of the rotor blade. The serrations comprise openings. The document WO 2014/207015 A1 also discloses a rotor blade of a wind turbine with noise reduction means. The noise reduction means comprises a passage for influencing the airflow flowing from the leading edge section of the rotor blade to the trailing edge section, such that noise, which is generated by the interaction of the airflow and the rotor blade, is reduced.
However, there exists the desire to provide a concept for further noise reduction at the trailing edge section of a rotor blade for a wind turbine.

This objective is achieved by the independent claim. Advantageous embodiments and modifications are described in the dependent claims.
According to the invention, there is provided a rotor blade for a wind turbine with a noise reducing device at the trailing edge section of the rotor blade. The noise reducing device comprises at least a first opening such that the airflow from the leading edge section of the rotor blade to the trailing edge section of the rotor blade is partially diverted through the first opening. Thus, noise which is generated at the trailing edge of the rotor blade is reduced.

In this context, a wind turbine refers to a device which is suited to convert kinetic energy from the wind into rotational energy. This rotational energy is subsequently used to generate electricity.

Trailing edge noise is referred to as noise which is generated by the interaction between the trailing edge section of the rotor blade and airflow which is impinging on the trailing edge section. In particular, trailing edge noise is produced due to the interaction of turbulent eddies with the trailing edge of the rotor blade. The efficiency of noise scattering is highest when the trajectory of these eddies is perpendicular to the trailing edge. Existing concepts for re ducing trailing edge noise conventionally rely on lowering the angle between the trajectory of the eddies and the trailing edge being responsible for noise scattering. An example for lowering the angle between the trajectory of the eddies and the trailing edge is the provision of a serrated trailing edge.

One part of the noise which is generated is caused by the pressure recovery in the aft of the airfoil. This pressure recovery can be very aggressive, leading to an increased turbulence.

The provision of at least the first opening serves the purpose of reducing the pressure difference at the aft portion of the airfoil between the pressure side and the suction side of the rotor blade. In other words, it provides more time for the airflow in the aft portion to equalize. In other words, the pressure at the suction side and the respective pressure at the pressure side have more time to equalize. This alleviation of the pressure difference and thus the smoothening of the pressure recovery due to the gradual equalization of the pressure in the trailing edge section is achieved by partially diverting the airflow through the first opening.

Advantageously, the main portion of the airflow flowing from the leading edge section to the trailing edge section of the rotor blade still remains at the pressure side and the suction side of the rotor blade, respectively. Only a portion of the airflow is diverted, in other words deflected, such that it changes its flow path and flows through the first opening of the noise reducing device. As a consequence of the partial deflection of the airflow through the opening, the pressure difference at the trailing edge between the pressure side and the suction side decreases; thus, only a smaller pressure difference has to equalize at the trailing edge.

Note that, generally, the pressure and suction side of a rotor blade are defined such that the pressure of the airflow is higher on the pressure side compared to the pressure of the airflow on the suction side. Thus, it can be said that the fraction of the airflow which is diverted through the first opening always flows from the pressure side of the rotor blade towards the suction side of the rotor blade.
Further note that the assignment which side of the rotor blade refers to the pressure side and which side refers to the suction side may change if the direction of the impinging airflow with regard to the chord line of the rotor blade changes. Such a change of direction may e.g. occur because of a change of the direction of the wind or because of pitching the rotor blade or because of yawing the nacelle of the wind turbine.
Advantageously, the shape of the first opening is optimized and could be, for instance, elliptic, rectangular, convex or concave. Likewise, the size, the number and the location of the first opening with regard to the noise reducing device is advantageously optimized and adapted to the particular design of the rotor blade. The mentioned parameters may also be optimized according to the design performance and the intended operation of the rotor blade.
As it has been mentioned already, various geometries of the first opening are possible. According to the invention, the geometry of the first opening has the shape of a slit. In this context, a slit is defined as having a length which is considerably larger, namely at least three times larger, in particular at least five times larger, than its width. Note that the geometry of the first opening refers to the shape of the first opening as viewed in a top view onto the first opening.
A slit-shaped first opening has the advantage of both ease of manufacturing and efficient airflow influencing potential. The first opening is, in a first alternative, arranged in substantially chordwise orientation of the rotor blade. The chordwise orientation refers to the direction of the chord length of the rotor blade. "Substantially" comprises any deviations up to 10 % from a perfect chordwise orientation of the first opening.
Furthermore, it has been proven particularly efficient to provide at least a second opening with a similar geometry as the first opening, thus providing a pair of openings consisting of the first opening and the second opening.

According to the invention, the first opening and the second opening are arranged such with regard to each other that they converge towards each other in chordwise direction. In another advantageous embodiment, not forming part of the present invention, the first opening and the second opening diverge from each other in chordwise direction.

Additionally, these diverging or converging openings may have sidewalls which are inclined towards each other or inclined away of each other, respectively. Note that, in a particular embodiment, both sidewalls of one opening are inclined by the same angle, such that the opening as such has a constant width as measured in flapwise direction from the pressure side to the suction side of the rotor blade.
A pair of diverging openings are called co-rotating openings as they induce a rotation of the diverted airflow which has the same rotational direction as the vortices which are generated at the trailing edge. In the case of a serrated trailing edge, these vortices which are generated at the trailing edge of the rotor blade are indeed generated along the edge of the serrations. Co-rotating openings, in particular in combination with inclined sidewalls, lead to an increase of the rotation of the airflow at the trailing edge of the rotor blade.

Likewise, a pair of converging openings leads to a counterrotating airflow flowing through the openings, thus the rotational movement of the airflow flowing from the leading edge section to the trailing edge section of the rotor blade is reduced.
Both alternatives, i.e. the co-rotating and the counterrotating openings, in particular in combination with inclined sidewalls, have the potential of advantageously influence the pressure recovery at the trailing edge section. In other words, the slits introduce a rotation of the airflow either clockwise or counterclockwise depending on the angle of the slits relative to the trailing edge. This is believed to be beneficial for reduction of the noise generated at the trailing edge section of the rotor blade.
In another advantageous embodiment, the noise reducing device comprises serrations, thus the rotor blade comprises at least partially a serrated trailing edge.
Note, that in principle, also a noise reducing device with a straight trailing edge, i.e. which is substantially parallel to the spanwise direction of the rotor blade, comprising at least a first opening as described has the potential of reducing noise at the trailing edge. This is the case because the mere provision of openings in the noise reducing device may smoothen the pressure recovery at the trailing edge section; thus, less aggressive turbulences are provided in the trailing edge section. However, it is particularly advantageous to combine the concept of providing a noise reduction device with an opening with the conventional concept of modifying the angle between the trajectory of the airflow at the trailing edge, which is achieved by conventional serrations. Thus, both concepts fit together well such that the noise reduction which is globally achieved may further be improved. In particular, the serrations may comprise a first tooth and at least a second tooth, and the first tooth is provided with the pair of openings. In particular, the pair of openings comprises a converting first and second opening or a diverting first and second opening.

Particularly, all teeth of the serrations are provided with a pair of openings each.

In another advantageous embodiment, the noise reducing device is at least partially arranged in the outer half of the rotor blade.

Thus, the noise reducing device with at least a first opening is preferably located at a similar position as it would be without the first opening. The placement of the noise reducing device at the outer half of the rotor blade is preferred because the outer half of the rotor blade is responsible for most of the trailing edge noise. This is inter alia due to the fact that the more radially outward the section of the rotor blade is the higher the speed of this section is during operation of the wind turbine, i.e. during rotation of the rotor blade about the rotor axis.

In another advantageous embodiment, the first opening is arranged in substantially spanwise orientation of the rotor blade. This has the potential to introduce an upward motion of the airflow, also leading to a less aggressive pressure recovery at the trailing edge. Such a spanwise located first opening is arranged and prepared for letting a fraction of the airflow, which flows from the leading edge section to the trailing edge section of the rotor blade, flow through the opening from the pressure side to the suction side of the rotor blade.

In another advantageous embodiment, the noise reducing device comprises the shape of a plate wherein the plate is defined such that it has a width which is at least five times smaller than its chordwise length and/or its spanwise length.

Such a plate is also referred to as a serrated panel, in the case that the plate comprises serrations.

Furthermore, the invention is directed towards a wind turbine for generating electricity, which comprises at least one rotor blade with a noise reducing device at the trailing edge section of the rotor blade as described above.

Embodiments of the invention are now described, by way of example only, with reference to the accompanying drawings, of which:
Figure 1 shows a wind turbine;
Figure 2 shows a rotor blade of a wind turbine with a noise reducing device;
Figure 3 shows a first embodiment of a noise reducing device comprising diverging slits;
Figure 4 shows a cross-sectional view of the first embodiment along the line A - A';
Figure 5 shows a second embodiment of a noise reducing device comprising converging slits;
Figure 6 shows a cross-sectional view of the second embodiment along the line B - B';
Figure 7 shows a third embodiment of a noise reducing device comprising spanwise orientated slits; and
Figure 8 shows a cross-sectional view of the third embodiment along the line C - C'.

The illustration in the drawings is in schematic form. It is noted that in different figures, similar or identical elements may be provided with the same reference signs.

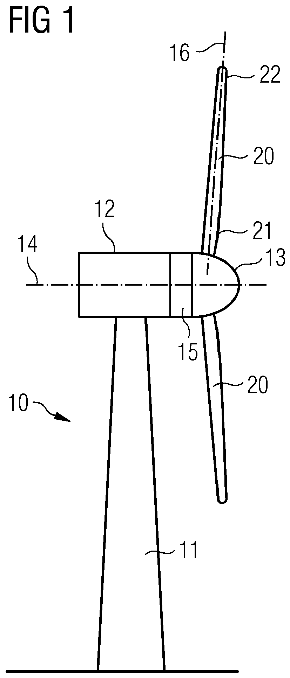

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

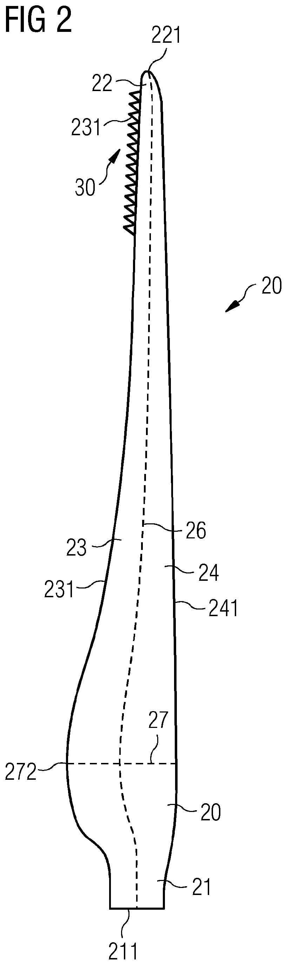

Figure 2 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26. The shoulder 272 is defined in the region where the chord line comprises a maximum chord length.

Furthermore, the rotor blade 20 can be divided into an inboard section which comprises the half of the rotor blade 20 adjacent to the root section 21 and an outboard section which comprises the half of the rotor blade 20 which is adjacent to the tip section 22.

The rotor blade 20 of Figure 2 furthermore comprises a noise reducing device 30 at the outboard section of the rotor blade 20. Thus, the rotor blade 20 has a serrated trailing edge in the outboard section of the rotor blade and a straight trailing edge in the remaining part of the rotor blade.

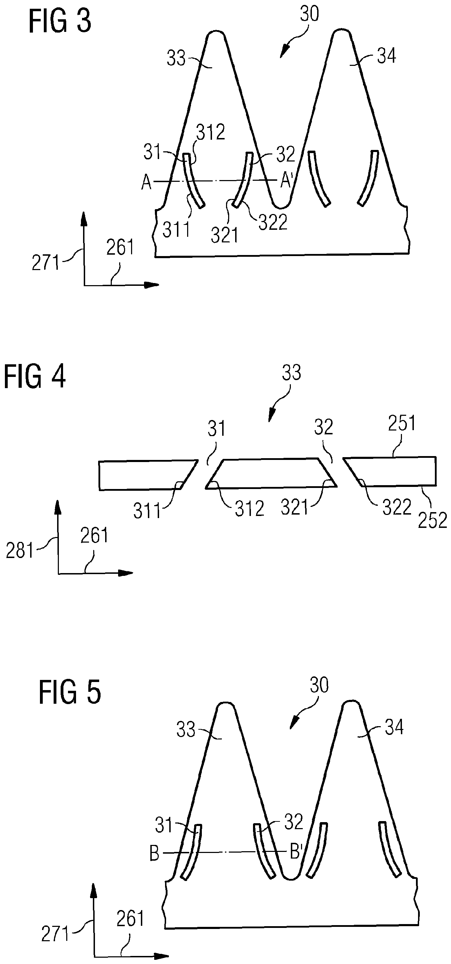

Figures 3 to 8 illustrate three embodiments of noise reducing devices 30. Figures 3, 5 and 7 illustrate these embodiments in a top view from the suction side towards the pressure side of the rotor blade. Figures 4, 6 and 8 illustrate these embodiments in a cross-sectional view along the lines A - A', B - B' and C - C', respectively. All three embodiments comprise a noise reducing device which is configured as a serrated panel. The serrated panel has a plurality of teeth of which a first tooth 33 and a second tooth 34 are depicted.

Figure 3 shows the first tooth 33 and the second tooth 34 of the noise reducing device 30. The first tooth has a first opening 31 and a second opening 32. Both openings 31, 32 build a pair of openings. Both openings 31, 32 are shaped as slits. The slits do not have a straight, i.e. rectangular geometry, but they are slightly curved. This curvature is beneficial for an efficient rotational movement, i.e. for an introduction of such a movement to the airflow which is flowing through the openings from the pressure side of the rotor blade to the suction side of the rotor blade. Note that the slits are arranged in substantially chordwise orientation 271. However, they are not strictly parallel to each other, but moreover they diverge from each other. Furthermore, the sidewalls 311, 312 of the first opening 31 are inclined towards the sidewalls 321, 322 of the second opening 32, as viewed in a cross-sectional view from the pressure side 252 towards the suction side of the rotor blade, cf. Figure 4. In other words, the openings are designed in three dimensions with sidewalls which are inclined with regard to a straight line extending in flapwise direction 281 of the rotor blade. In Figure 3, the flapwise direction would be perpendicular to the plane which is drawn in Figure 3.

In other words, the left sidewall 311 of the first opening 31 is inclined from the left to the right, thus in spanwise direction 261. The right sidewall 312 of the first opening 31 is also inclined from the left to the right, thus also in spanwise direction 261. In contrast, the left sidewall 321 of the second opening 32 is inclined from the right to the left, thus against the spanwise direction 261. The right sidewall 322 of the second opening 31 is also inclined from the right to the left, thus also against the spanwise direction 261.

In summary, both sidewalls 311, 312 of the first opening 31 are substantially parallel to each other and both sidewalls 321, 322 of the second opening 32 are substantially parallel to each other; however, the sidewalls 311, 312 of the first opening 31 are inclined against the sidewalls 321, 322 of the second opening 32.

The divergence of the openings and/or the inclination of the sidewalls induce a co-rotating movement to the airflow, thus increasing the rotational movement of the turbulent eddies at the trailing edge section of the rotor blade.

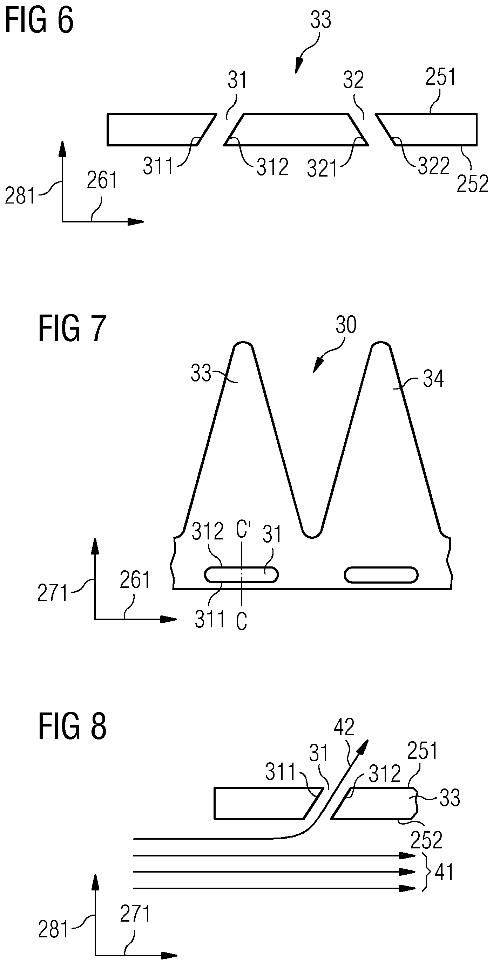

Figure 5 shows a similar embodiment of a noise reducing device 30. In contrast to the first embodiment, however, this embodiment features a pair of openings 31, 32 which converge towards each other. Furthermore, the sidewalls 311, 312 of the first opening 31 are inclined away from the sidewalls 321, 322 of the second opening 32, as viewed in a cross-sectional view from the pressure side 252 towards the suction side of the rotor blade, cf. Figure 6.As a consequence, a counter-rotational movement is induced to the airflow at the serrated edges of trailing edge at the first tooth 33. Thus, the overall rotational movement of the airflow is decreased. This also may contribute beneficially to the aim of reducing noise at the trailing edge section of the rotor blade.

In contrast to the previous embodiments, the first opening 31 in Figure 7 is orientated in substantially spanwise orientation 261. Furthermore, the first opening 31 is arranged relatively upstream of the noise reducing device 30. This induces an air curtain with air flowing from the pressure side of the rotor blade to the suction side of the rotor blade. This type of barrier or curtain has the effect that the pressure recovery of the airflow at the trailing edge of the rotor blade is slowed down as well. This also leads to a potential noise reduction of the rotor blade during operation.

In Figure 8, which is a cross-sectional view along the line C - C' in Figure 7, the sidewalls 311, 312 of the first opening 31 are depicted. Exemplarily, these sidewalls 311, 312 are slightly inclined with regard to the flapwise direction 281 of the rotor blade. This inclination facilitates the deflection of a part of the airflow, leading to an air curtain at the suction side 251 of the rotor blade.

Figure 8 also visualizes that the main part 41 of the airflow passes along the first tooth 33; however, a certain part 42 of the airflow is diverted through the first opening 31.

Alternatively, the sidewalls 311, 312 may also be designed as substantially parallel to the flapwise direction 281 of the rotor blade.

## Claims

1. Rotor blade (20) for a wind turbine (10) with a noise reducing device (30) at the trailing edge section (23) of the rotor blade (20),
wherein
- the noise reducing device (30) comprises at least a first opening (31) such that the airflow from the leading edge section (24) of the rotor blade (20) to the trailing edge section (23) of the rotor blade (20) is partially diverted through the first opening (31),
- the noise reducing device (30) comprises at least a second opening (32) with a similar geometry as the first opening (31), the first opening (31) and the second opening (32) thus building a pair of openings,
- the first opening (31) has the geometry of a slit having a length which is at least three times greater than its width,
- the first opening (31) is arranged in substantially chordwise orientation (271) of the rotor blade (20), and
- the first opening (31) and the second opening (32) converge towards each other in chordwise direction, thus decreasing the rotation of the airflow at the trailing edge (231) of the rotor blade (20), thus noise which is generated at the trailing edge (231) of the rotor blade (20) is reduced.

2. Rotor blade (20) according to claim 1,
wherein the fraction of the airflow which is diverted through the first opening (31) flows from the pressure side (252) of the rotor blade (20) to the suction side (251) of the rotor blade (20).

3. Rotor blade (20) according to one of the preceding claims, wherein the sidewalls (311, 312) of the first opening (31) and the sidewalls (321, 322) of the second opening (32) are inclined away from each other, as viewed in the flapwise direction (281) from the pressure side (252) to the suction side (251).

4. Rotor blade (20) according to one of the preceding claims, wherein the noise reducing device (30) comprises serrations, thus the rotor blade (20) comprises at least partially a serrated trailing edge (231).

5. Rotor blade (20) according to claim 4,
wherein
- the serrations comprise a first tooth (33) and at least a second tooth (34), and
- the first tooth (33) is provided with the pair of openings.

6. Rotor blade (20) according to one of the preceding claims, wherein the noise reducing device (30) is at least partially arranged in the outer half of the rotor blade (20).

7. Rotor blade (20) according to one of the preceding claims, wherein the noise reducing device (30) comprises the shape of a plate having a width which is at least five times smaller than its chordwise length and/or its spanwise length.

8. Wind turbine (10) for generating electricity comprising at least one rotor blade (20) according to one of the preceding claims.

## Patentansprüche

1. Rotorblatt (20) für eine Windenergieanlage (10) mit einer geräuschreduzierenden Vorrichtung (30) am Hinterkantenabschnitt (23) des Rotorblatts (20),
wobei
- die geräuschreduzierende Vorrichtung (30) zumindest eine erste Öffnung (31) umfasst, so dass der Luftstrom vom Vorderkantenabschnitt (24) des Rotorblatts (20) zum Hinterkantenabschnitt (23) des Rotorblatts (20) teilweise durch die erste Öffnung (31) umgeleitet wird,
- die geräuschreduzierende Vorrichtung (30) zumindest eine zweite Öffnung (32) mit einer ähnlichen Geometrie wie die erste Öffnung (31) umfasst, so dass die erste Öffnung (31) und die zweite Öffnung (32) ein Paar Öffnungen bilden,
- die erste Öffnung (31) die Geometrie eines Schlitzes mit einer Länge aufweist, die mindestens dreimal größer ist als seine Breite,
- die erste Öffnung (31) im Wesentlichen in Profilsehnenrichtung (271) des Rotorblatts (20) angeordnet ist und
- die erste Öffnung (31) und die zweite Öffnung (32) in Profilsehnenrichtung zusammenlaufen und so die Rotation des Luftstroms an der Hinterkante (231) des Rotorblatts (20) verringern, so dass ein an der Hinterkante (231) des Rotorblatts (20) erzeugtes Geräusch reduziert wird.

2. Rotorblatt (20) nach Anspruch 1,
wobei der Teil des Luftstroms, der durch die erste Öffnung (31) umgeleitet wird, von der Druckseite (252) des Rotorblatts (20) zur Saugseite (251) des Rotorblatts (20) strömt.

3. Rotorblatt (20) nach einem der vorhergehenden Ansprüche, wobei die Seitenwände (311, 312) der ersten Öffnung (31) und die Seitenwände (321, 322) der zweiten Öffnung (32) bei Betrachtung in Schlagrichtung (281) von der Druckseite (252) zur Saugseite (251) voneinander weg geneigt sind.

4. Rotorblatt (20) nach einem der vorhergehenden Ansprüche, wobei die geräuschreduzierende Vorrichtung (30) Zacken umfasst, so dass das Rotorblatt (20) eine zumindest teilweise gezackte Hinterkante (231) umfasst.

5. Rotorblatt (20) nach Anspruch 4,
wobei
- die Zacken einen ersten Zahn (33) und zumindest einen zweiten Zahn (34) umfassen und
- der erste Zahn (33) mit dem Paar Öffnungen versehen ist.

6. Rotorblatt (20) nach einem der vorhergehenden Ansprüche, wobei die geräuschreduzierende Vorrichtung (30) zumindest teilweise in der äußeren Hälfte des Rotorblatts (20) angeordnet ist.

7. Rotorblatt (20) nach einem der vorhergehenden Ansprüche, wobei die geräuschreduzierende Vorrichtung (30) die Form einer Platte mit einer Breite umfasst, die mindestens fünfmal geringer ist als ihre Profilsehnenlänge und/oder ihre Spannweitenlänge.

8. Windenergieanlage (10) zum Erzeugen von elektrischem Strom mit mindestens einem Rotorblatt (20) nach einem der vorhergehenden Ansprüche.

## Revendications

1. Pale (20) de rotor pour une éolienne (10) avec un dispositif (30) de réduction de bruit au niveau de la section (23) de bord de fuite de la pale (20) de rotor,
dans laquelle
- le dispositif (30) de réduction de bruit comprend au moins une première ouverture (31) telle que l'écoulement d'air de la section (24) de bord d'attaque de la pale (20) de rotor à la section (23) de bord de fuite de la pale (20) de rotor est partiellement dévié à travers la première ouverture (31),
- le dispositif (30) de réduction de bruit comprend au moins une deuxième ouverture (32) avec une géométrie similaire à la première ouverture (31), la première ouverture (31) et la deuxième ouverture (32) composant ainsi une paire d'ouvertures,
- la première ouverture (31) a la géométrie d'une fente ayant une longueur qui est au moins trois fois plus grande que sa largeur,
- la première ouverture (31) est agencée dans une orientation sensiblement en corde (271) de la pale (20) de rotor, et
- la première ouverture (31) et la deuxième ouverture (32) convergent l'une vers l'autre dans le sens de la corde, diminuant ainsi la rotation de l'écoulement d'air au niveau du bord de fuite (231) de la pale (20) de rotor, ainsi le bruit qui est généré au niveau du bord de fuite (231) de la pale (20) de rotor est réduit.

2. Pale (20) de rotor selon la revendication 1,
dans laquelle la fraction de l'écoulement d'air qui est déviée à travers la première ouverture (31) s'écoule du côté pression (252) de la pale (20) de rotor jusqu'au côté aspiration (251) de la pale (20) de rotor.

3. Pale (20) de rotor selon l'une des revendications précédentes,
dans laquelle les parois latérales (311, 312) de la première ouverture (31) et les parois latérales (321, 322) de la deuxième ouverture (32) sont inclinées à l'écart l'une de l'autre, telles que vues dans le sens du battement (281) du côté pression (252) au côté aspiration (251).

4. Pale (20) de rotor selon l'une des revendications précédentes,
dans laquelle le dispositif (30) de réduction de bruit comprend des dentelures, ainsi la pale (20) de rotor comprend au moins partiellement un bord de fuite (231) dentelé.

5. Pale (20) de rotor selon la revendication 4,
dans laquelle
- les dentelures comprennent une première dent (33) et au moins une deuxième dent (34), et
- la première dent (33) est prévue avec la paire d'ouvertures.

6. Pale (20) de rotor selon l'une des revendications précédentes, dans laquelle le dispositif (30) de réduction de bruit est au moins partiellement agencé dans la moitié extérieure de la pale (20) de rotor.

7. Pale (20) de rotor selon l'une des revendications précédentes, dans laquelle le dispositif (30) de réduction de bruit comprend la forme d'une plaque ayant une largeur qui est au moins cinq fois plus petite que sa longueur dans le sens de la corde et/ou sa longueur dans le sens de l'envergure.

8. Éolienne (10) pour générer de l'électricité comprenant au moins une pale (20) de rotor selon l'une des revendications précédentes.
